# EUROPEAN PATENT APPLICATION

(11) **EP 1 843 073 A2**
(43) Date of publication of application: **10.10.2007**
(21) Application number: 07394010.8
(22) Date of filing: 04.04.2007
(51) Int. Cl.: F16L 25/00

(54) **Connector for corrugated conudit**

(30) Priority: 06.04.2006 US 399707
(71) Applicant: Flow-Rite Controls, Inc., Byron Centre MI 49301 (US)
(72) Inventor: Campau, Daniel N., Ada, MI 49301 (US)
(74) Representative: Casey, Lindsay Joseph

(57) **Abstract**

A connector (10) that forms fluid tight seals with corrugated conduit (19) that contain longitudinally spaced annular recesses (20) on their outer surfaces. The connector (10) comprises a plurality of receptacles (12) and at least one sealing ring (11). Each receptacle (12) further comprises an annular protuberance (18) that extends inwardly. To form a tight seal, a sealing ring (11) is first inserted into each one of the receptacles (12) on the connector (10). A corrugated conduit (19) is then inserted into each of the receptacles (12) such that the annular protuberance (18) on each receptacle (12) spans at least one of the annular recesses (20) on the conduit (19). The sealing ring (11) is then positioned on top of the annular protuberance (18) on the receptacle (12).

## Description

### Background of the invention

The present invention relates generally to the field of coupling devices. More particularly, the present invention relates to the field of conduit or tubing connectors.
Conduit or tubing networks are used in many industrial, commercial and residential applications. For instance, such networks can be used as sprinkler systems, irrigation systems, outdoor misting systems and air supply systems. Tubing or conduit networks can also be used as single point watering (SPW) systems for supplying battery cells with make-up electrolyte. In such systems, a single tube or conduit supplies the electrolyte fluid to a plurality of battery cells through refill valves. Conduit networks may also be used as enclosure systems for electrical wiring fiber optics. Oftentimes, it is necessary or desirable that such systems be water/moisture tight.

In general, connectors are most typically composed of non-flexible and non-elastic materials, such as metals or rigid plastics. In addition, the assembly and disassembly of many connectors are time consuming. Many such connectors are also relatively bulky. Thus, the connectors in the prior art may not be practical for use in compact systems and where the speed or facility of connector installation is an important factor in the cost of the system.

Many of the connectors in the prior art are also not practical for use with corrugated conduit. For instance, such connectors may fail to form a tight seal due to the conduit corrugation. In addition, the use of push-style fittings may not be practical for use with corrugated conduit because they may increase internal pressure or interfere with the fluid flow path. Consequently, such limitations may lead to safety problems, including gas leaks or liquid spills.

Therefore, there is currently an unmet need for coupling devices that can be used with corrugated conduit to form tight, compact, and flexible tubing networks. There is also a need for coupling devices for use with corrugated conduit that can be easily and quickly assembled and disassembled without reliance on special equipment. There is also a need for coupling devices for use with corrugated conduit that do not interfere substantially with the fluid flow through the conduit. The present invention addresses these unmet needs.

### Summary of Invention

According to an aspect of the present invention, there is provided a connector as specified in Claim 1.

The invention is also directed to a method by which the described apparatus operates and includes method steps for carrying out every function of the apparatus.

The present invention provides a connector for forming fluid tight seals with corrugated conduit having a series of longitudinally spaced annular recesses on its outer surface. The connector comprises a cylindrical receptacle with a free end, a proximal end, and a sidewall. The connector further comprises a sealing ring that is slidably disposed over the receptacle. In addition, each receptacle defines a lumen that is sized to receive a free end of a conduit and includes an annular protuberance that extends inwardly from the sidewall and is sized to span at least one of the outside recesses on the conduit.
To form a fluid tight seal, the sealing ring is first positioned toward the proximal end of the receptacle. The free end of the conduit is then inserted into the receptacle such that the annular protuberance on the sidewall of the receptacle spans at least one of the annular recesses on the conduit. The sealing ring is then positioned such that it is axially coincident with the annular protuberance thereby sealingly engaging the protuberance with the outer surface of the conduit.

### Brief Description of the Drawings

The novel features which are characteristic of the present invention are set forth in the appended claims. However, the invention's preferred embodiments, together with further objects and attendant advantages, will be best understood by reference to the following detailed description taken in connection with the accompanying drawings in which:
Fig. 1 is a perspective view of one embodiment of the connector of the present invention;
Fig. 2 is a cross-sectional view of the connector in Fig. 1;
Fig. 3 shows the association of the connector in Fig. 2 with a corrugated conduit; and
Figs. 4-6 show alternative embodiments of the connector of the present invention.

### Detailed Description of the Preferred Embodiments

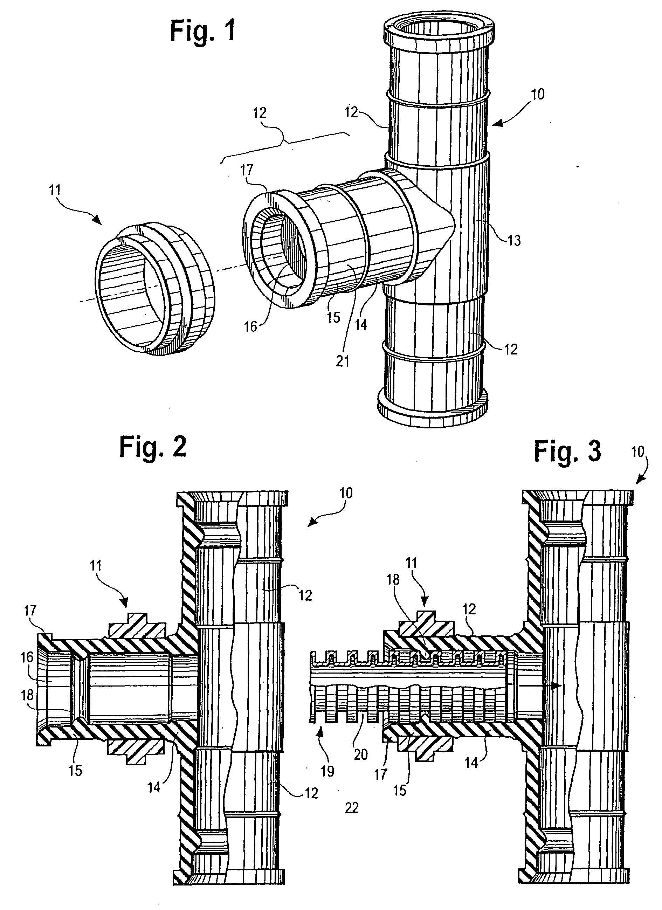

As shown in the preferred embodiment in Figure 1, the present invention generally comprises connector 10 and sealing ring 11. Connector 10 is preferably made of a flexible, elastomeric polymer. It is also desirable that connector 10 be thermoplastic and acid resistant.

Connector 10 includes one or more receptacles 12. Each receptacle is cylindrical and formed by sidewall 21 that defines a lumen 16. The internal diameter of lumen 16 is sized to receive the free end of a corrugated conduit 19. Receptacle 12 also comprises a proximal end 14 and a free end 15. In the preferred embodiment, free end 15 further comprises a circumferential flange 17 that extends outward from the receptacle sidewall. In addition, as shown in Figure 2, the inside of the receptacle sidewall 16 further comprises an annular protuberance 18 that extends inwardly and spans the inner circumference of the receptacle.

Turning again to Figure 1, sealing ring 11 is a circular structure made of a rigid plastic, such as polystyrene. As shown in Figure 2, it is desirable that sealing ring 11 be sized so that it can slide reciprocally over receptacle 12.

The preferred method of using the present invention is illustrated in Figures 2-3. In the first step of the preferred method, sealing ring 11 is positioned over the free end 15 of receptacle 12 and moved to the proximal end 14. Flange 17 will prevent sealing ring 11 from inadvertent disassembly from the receptacle. Next, as shown in Figure 3, corrugated conduit 19 with multiple annular recesses 20 is inserted into lumen 16 of receptacle 12 such that protuberance 18 is aligned with an annular recess 20 on the conduit. Sealing ring 11 is then moved from the proximal end to the free end of receptacle 12 and placed over or around protuberance 18. As a result, sealing ring 11 exerts pressure on protuberance 18 to form a fluid tight seal between conduit 19 and connector 10.

The steps illustrated in Figures 2-3 may be repeated with other remaining receptacles on connector 10 to form a tubing network. For disassembly, sealing ring 11 is first pushed to the proximal end 14 of receptacle 12. This releases the pressure on protuberance 18. Conduit 19 may then be pulled out.

A fluid tight seal simply refers to a seal that prevents fluids from leaking out of the tubing network. To ensure a fluid tight seal in the present invention, it is desirable that sealing ring 11 have a width or axial dimension greater than the width or axial dimension of protuberance 18. Likewise, it is desirable that protuberance 18 have a width or axial dimension greater than the width of recesses 20 on the conduit. By fabricating the connector body from flexible plastic, the receptacle may be easily expanded to allow insertion or removal of the conduit free end during connection or disconnection.

It has been shown that corrugated tubing networks assembled by the preferred embodiment of the present invention are suitable for use in pressurized systems that operate at high temperatures. Particularly, the present invention can be used to form single point watering (SPW) systems that supply fluids to lead-acid batteries. Single point watering systems generally comprise a water feed tube that is connected to a plurality of refill valves through a tubing network. Each refill valve is mounted onto a single cell in the battery. Examples of such SPW systems and variations thereof are described in detail in United States Patent Specification Nos. US-A-5 832 946, US-A-5 284 176, US-A-5 482 794, US-A-5 453 334, US-A-6 782 913, and US-A-6 644 338. The disclosures of these patents are hereby incorporated by reference. The connector and corrugated conduit assemblies of the present invention may withstand system pressures of up to 50 psi (3.44737 X 10⁵ Pa) in SPW systems. In systems using small diameter conduit, the connector and conduit assemblies disclosed here may accommodate pressures up to 100 psi (6.89475 x 10⁵ Pa).

In other embodiments, the present invention may be used to form tubing networks for various commercial, residential, and industrial applications. For instance, in one embodiment, the present invention may be used to assemble a sprinkler system. In another embodiment, the present invention may be used in a tubing network to supply air. In another embodiment, the present invention may be used in a tubing network to supply various gases, such as oxygen, nitrogen, hydrogen, helium, or argon. In still another embodiment, the connector and conduit assemblies made in accordance with the present invention may find advantageous use as an enclosure system for electrical wiring and fiber optics.

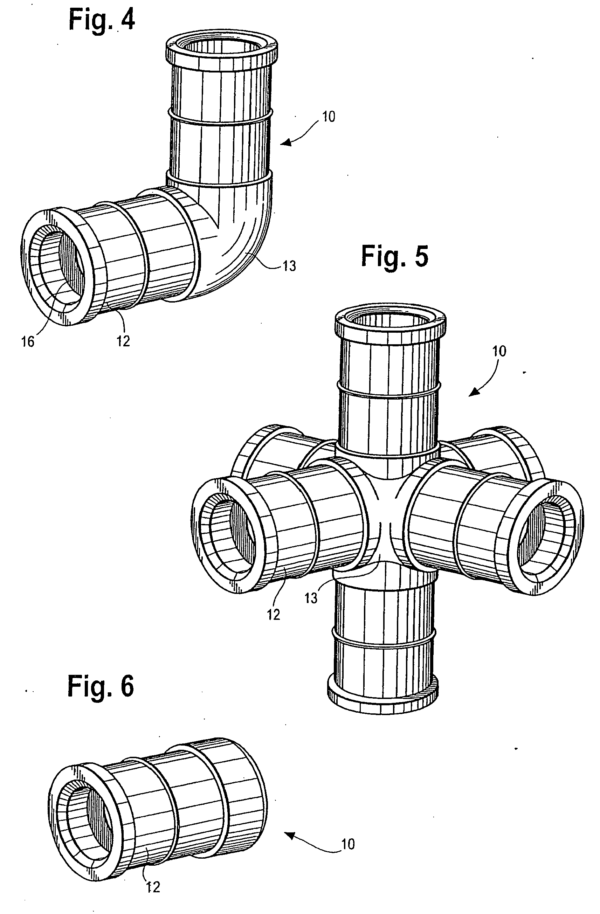

Connector 10 may be modified to accommodate the various applications of the present invention. For instance, as shown in Figure 4, connector 10 may only have two receptacles that are separated by a central segment 13. Likewise, as shown in Figure 5, connector 10 may have six receptacles. In addition, as shown in Figure 6, connector 10 may have two continuous receptacles without a central segment.

In further embodiments of the present invention, connector 10 may have multiple protuberances 18 in order to form a more robust seal with the corrugated conduit. A single sealing ring that spans all the protuberances may be used.

Though it is desirable that connector 10 be composed of polypropylene, other flexible polymers, such as polyethylene and nylon, may also be used. Connector 10 may also be composed of high performance polymers, such as polyvinyldiene fluoride (PVDF), cross-linked polyethylene (PEX), or polytetrafluoroethylene. In other embodiments, the flexible polymers in connector 10 may be co-polymerized with rigid polymers, such as polystyrene or polycarbonate. In further embodiments, the polymers used in connector 10 may be co-polymerized with plasticizers, such as polyvinyl chloride. In other embodiments, connector 10 may have a plurality of layers, where one layer is a metal or rigid plastic.

Similarly, sealing ring 11 may be composed of homogenous or heterogenous mixtures of polymers other than polystyrene. Examples include polycarbonate and poly alkyl methacrylate. Sealing ring 11 may also be a rigid metal.

It will be evident that there are numerous other embodiments of the present invention which, while not expressly described above, are clearly within the scope and spirit of the invention. The above description is therefore intended to be exemplary only and the scope of the invention is to be determined solely by the appended claims.

## Claims

1. A connector for use with corrugated conduit wherein the conduit has an outer surface including a series of longitudinally spaced annular recesses, said connector comprising:
(a). a cylindrical receptacle having a sidewall defining a lumen sized to receive a free end of the conduit, the receptacle having a free end and a proximal end;
(b) an annular protuberance extending inwardly from said receptacle sidewall and having a width sufficient to span at least one of the recesses on the conduit; and
(c) a sealing ring slidably disposed over the receptacle, whereby when the free end of the conduit is inserted into the receptacle and the ring is positioned axially coincident with the annular protuberance, the protuberance and the outer surface of the conduit engage to provide a fluid tight seal.

2. A connector as claimed in claim 1, wherein the free end of said receptacle further comprises an outwardly extending flange.

3. A connector as claimed in claim 1 or claim 2, comprising a plurality of said receptacles, each in fluid communication with the others at its proximal end.

4. A connector as claimed in any of claims 1-3, wherein the connector is a flexible polymer selected from the group consisting of polypropylene, polyethylene, nylon, polyvinyldiene fluoride, cross-linked polyethylene, and polytetrafluoroethylene.

5. A connector as claimed in any of Claims 1-4, wherein the sealing ring is a rigid polymer selected from the group consisting of polystyrene, polycarbonate, and polyalkyl methacrylate.

6. A connector as claimed in any of claims 1-5, wherein the width of the sealing ring is greater than the axial dimension of the annular protuberance.

7. A connector as claimed in any of claims 1-6 further comprising a plurality of annular protuberances.

8. A connector as claimed in claim 7, wherein one sealing ring substantially covers said plurality of annular protuberances.

9. A connector as claimed in any of claims 1-8 wherein the proximal end of the receptacle is closed thereby forming a plug for the free end of said conduit.
